# EUROPEAN PATENT APPLICATION

(11) **EP 4 339 555 A1**
(43) Date of publication of application: **20.03.2024**
(21) Application number: 22907937.1
(22) Date of filing: 14.12.2022
(51) Int. Cl.: G01B 11/08, G01B 11/02, H01M 10/04

(54) **ELECTRODE ASSEMBLY EXTERNAL DIAMETER MEASUREMENT DEVICE AND EXTERNAL DIAMETER MEASUREMENT METHOD**

(30) Priority: 14.12.2021 KR 20210179154
(71) Applicant: LG Energy Solution, Ltd., Seoul 07335 (KR)
(72) Inventor: JUNG, Hyeok Soon, Daejeon 34122 (KR); KIM, Min Ki, Daejeon 34122 (KR)
(74) Representative: Hoffmann Eitle
(86) International application number: PCT/KR2022/020373
(87) International publication number: WO 2023/113470

(57) **Abstract**

The present invention relates to an outer diameter measurement apparatus of an electrode assembly, which measures an outer diameter of the electrode assembly manufactured to have a cylindrical shape by winding electrodes and separators together so as to form a cylindrical shape and includes: a base plate on which the electrode assembly is mounted thereon; a guide bar configured to allow the electrode assembly to ascend from the base plate to a certain height; a housing configured to rotate around the electrode assembly ascending from the guide bar; and a sensor coupled to the housing to measure an outer diameter of the electrode assembly while the housing rotates.

In the present invention having the above technical features, since the sensor rotates to measure the outer diameter of the electrode assembly in the state in which the electrode as

## Description

### TECHNICAL FIELD

The present application claims the benefit of the priority of Korean Patent Application No. 10-2021-0179154, filed on December 14, 2021, which is hereby incorporated by reference in its entirety.

The present invention relates to an outer diameter measurement apparatus and an outer diameter measurement method of an electrode assembly, and more particularly, to an outer diameter measurement apparatus and an outer diameter measurement method of an electrode assembly, in which a sensor rotates (revolves) along a circumference in a state of being spaced a predetermined distance from the electrode assembly to measure an outer diameter in a state in which the cylindrical electrode assembly is fixed without rotating.

### BACKGROUND ART

Batteries storing electrical energy may be generally classified into primary batteries and secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged, and when the oxidation reaction to the material is performed by the current, power is discharged. Here, such the charging-discharging are repeatedly performed.

Among various types of secondary batteries, lithium secondary batteries are generally manufactured by mounting an electrode assembly, in which a positive electrode (cathode), a separator, and a negative electrode (anode) are stacked, in a case. Here, as a process, in which lithium ions are intercalated and deintercalated from lithium metal oxide to the negative electrode, is repeated to charge and discharge the lithium secondary batteries.

As a method for manufacturing the electrode assembly, a jelly-roll type (winding type) electrode assembly in which the separator is stacked between the negative electrode and the positive electrode and then wound to manufacture an electrode assembly, a stacking type electrode assembly in which each of a negative electrode and a positive electrode is cut by a desired width and length, and then, the negative electrode, the separator, the positive electrode are repeatedly stacked to form an electrode assembly, and a stacking and folding type electrode assembly in which unit cells are placed parallel to each other on a folding separator and then folded from one side to manufacture an electrode assembly have been known.

Among them, the jelly roll-type electrode assembly is manufactured by winding the positive electrode, the separator, and the negative electrode together so as to form layers on a winding core serving as a rotating shaft. That is, the separator is firstly put into the winding core, and then the negative electrode and the positive electrode are sequentially put in (here, an order and insertion position may vary according to product specifications). In addition, when the winding core rotates by a predetermined number of revolutions in a state in which the electrode is inserted up to the positive electrode, the winding type electrode assembly is manufactured.

The jelly roll-type electrode assembly manufactured in this manner has a cylindrical shape, and the outer diameter is measured to determine whether defects occur or for another purpose.

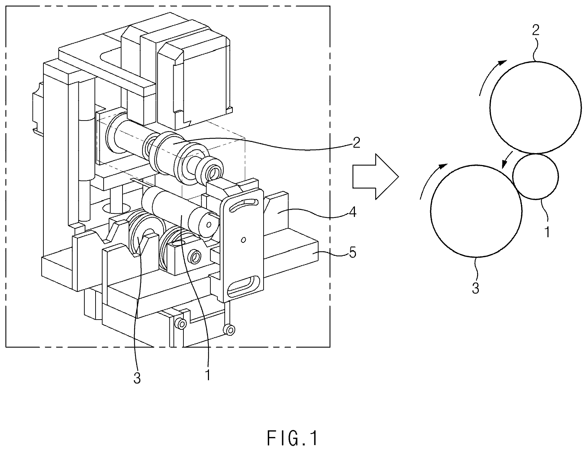

Referring to FIG. 1 that illustrates a shape (left side) of an outer diameter measurement apparatus and a state (right side) in which a pusher, an electrode assembly, and a roller rotate in a state of being in contact with each other in an outer diameter measurement apparatus, in the outer diameter measurement apparatus of the electrode assembly according to the related art, when the electrode assembly 1 is placed on a mount 4 erected vertically on a support plate 5, in a state in which the electrode assembly 1 is fixed by applying an appropriate pressure onto the electrode assembly 1 through the pusher 2, the roller 3 rotates together below the electrode assembly 1 to measure an outer diameter of the electrode assembly 1.

That is, as illustrated at the right side of FIG. 1, the pusher 2, the electrode assembly 1, and the roller 3 rotate together to be in contact with each other. Therefore, when the electrode assembly 1 rotates by a predetermined number of revolution, a size of a diameter of the roller 3 is known in advance. As a result, when a rotating amount of roller 3 is measured, an outer diameter of the electrode assembly may be calculated.

However, in the outer diameter measurement method according to the related art, a difference with an actual value according to the pressure applied by the pusher 2 occurs, and when the electrode assembly 1 is in direct contact with the pusher 2 and the roller 3 to rotate, if slip or friction occurs, an error may occur.

### DISCLOSURE OF THE INVENTION

### TECHNICAL PROBLEM

Therefore, a main object of the present invention for solving the above problem is to provide an outer diameter measurement apparatus and an outer diameter measurement method of an electrode assembly, which are capable of measuring an outer diameter without being in direct contact with the electrode assembly.

### TECHNICAL SOLUTION

The present invention provides an outer diameter measurement apparatus and an outer diameter measurement method of a cylindrical electrode assembly, which achieve the above-described object.

An outer diameter measurement apparatus of an electrode assembly, which measures an outer diameter of the electrode assembly manufactured to have a cylindrical shape by winding electrodes and separators together so as to form a cylindrical shape, according to the present invention includes: a base plate on which the electrode assembly is mounted thereon; a guide bar configured to allow the electrode assembly to ascend from the base plate to a certain height; a housing configured to rotate around the electrode assembly ascending from the guide bar; and a sensor coupled to the housing to measure an outer diameter of the electrode assembly while the housing rotates.

The sensor may include a non-contact distance measurement sensor configured to measure a distance by irradiating a light source onto a surface of the electrode assembly.

The light source irradiated onto the surface of the electrode assembly may include any one of laser or infrared rays.

The housing may have a partially opened shape to prevent an interference with the guide bar when rotating around the electrode assembly.

The outer diameter measurement apparatus may further include a bracket having one end coupled to the base plate and the other end coupled to the housing, wherein the housing may rotate at a point that is coupled to the bracket.

The sensor may be mounted on any one of both ends of the housing.

The housing may rotate forward and reversely an angle of 180° with the electrode assembly as a center.

The sensor may be mounted on each of both ends of the housing with the electrode assembly therebetween.

An outer diameter measurement method of an electrode assembly, which measures an outer diameter of the electrode assembly manufactured to have a cylindrical shape by winding electrodes and separators together so as to form a cylindrical shape, according to the present invention includes: an electrode assembly ascending process of allowing the electrode assembly mounted on a base plate to ascend to a predetermined height; and an electrode assembly outer diameter measurement process of allowing a sensor to rotate around a circumference of the electrode assembly in a state, in which movement of the ascending electrode assembly is fixed, to measure an outer diameter of the electrode assembly.

In the electrode assembly outer diameter measurement process, the sensor may receive a reflected light source to measure a distance after irradiating the light source onto a surface of the electrode assembly, and the distance measured using a rotating distance of the sensor and the light source may be calculated to measure the outer diameter of the electrode assembly.

### ADVANTAGEOUS EFFECTS

In the present invention having the above technical features, since the sensor rotates to measure the outer diameter of the electrode assembly in the state in which the electrode assembly is fixed, the outer diameter may be more accurately measured.

That is, unlike the structure in which the electrode assembly rotates, according to the related art, since the physical influence does not occur on the electrode assembly, the reliability of the measured value of the outer diameter may be improved.

Particularly, since the sensor is provided as the non-contact distance measurement sensor, the physical effects such as the friction and slip applied to the electrode assembly may be completely excluded.

Since the opening is formed in the housing in which the sensor is mounted (having the partially opened shape), the interference with the guide bar may be prevented, and the rotatable range of the housing may increase.

That is, the housing may rotate an angle of 180° or more in the clockwise and counterclockwise directions, and thus, the sensor may rotate along the entire circumference of the electrode assembly to measure the outer diameter.

### BRIEF DESCRIPTION OF THE DRAWINGS

FIG. 1 is a view illustrating a shape (left side) of an outer diameter measurement apparatus of an electrode assembly according to the related art and a state (right side) in which a pusher, an electrode assembly, and a roller are in contact with each other in the outer measurement apparatus.
FIG. 2 is a view illustrating a state in which an outer diameter measurement apparatus of an electrode assembly is viewed from above according to the present invention.
FIG. 3 is a view illustrating a state in which the outer diameter measurement apparatus of the electrode assembly is viewed from the side according to the present invention.
FIG. 4 is a view illustrating a state in which a housing rotates at an angle of 180° when the outer diameter measurement apparatus of the electrode assembly is viewed from the front according to the present invention.
FIG. 5 is a view illustrating a state in which a guide bar allows the electrode assembly to ascend up to a fixed height when the outer diameter measurement apparatus of the electrode assembly is viewed from the front according to the present invention.
FIG. 6 is a view illustrating a state in which a housing rotates in the state of FIG. 5.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to an outer diameter measurement apparatus and an outer diameter measurement method of a cylindrical electrode assembly, in which a sensor 40 rotates (revolves) along a circumference of the electrode assembly 1 in a state of being spaced a predetermined distance from the electrode assembly to measure an outer diameter in a state in which the cylindrical electrode assembly is fixed without rotating. Hereinafter, embodiments of the present invention will be described in more detail with reference to the accompanying drawings.

### First embodiment

In the present invention, an outer diameter measurement apparatus of a cylindrical electrode assembly is provided as a first embodiment.

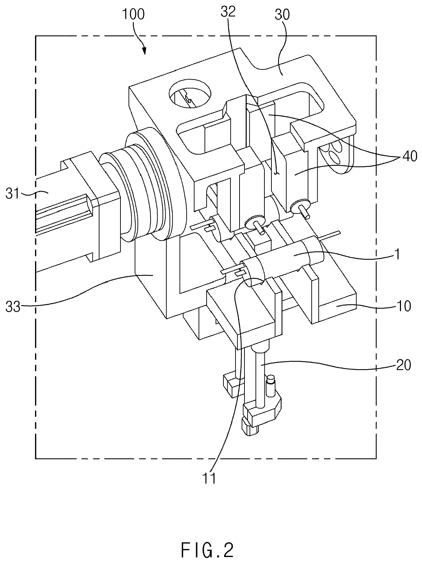

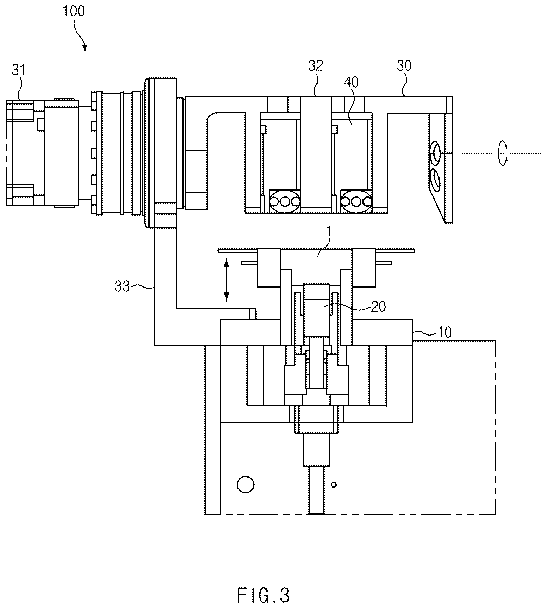

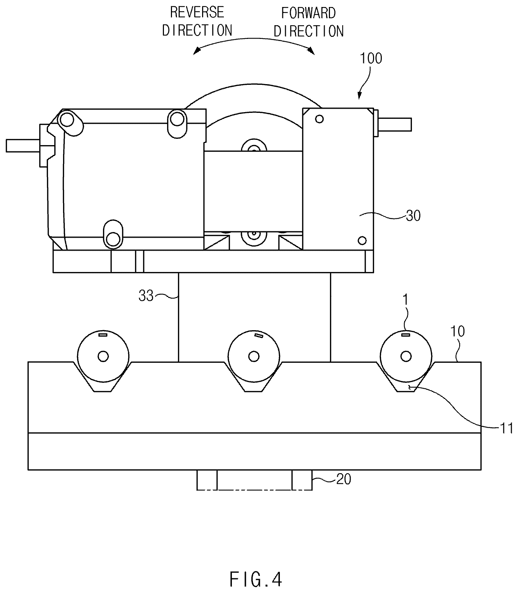

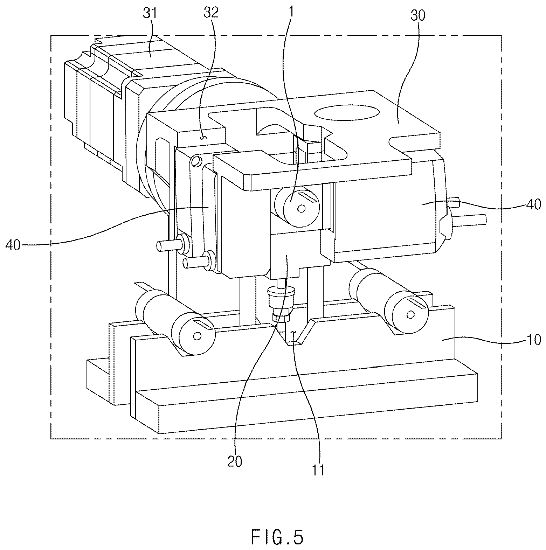

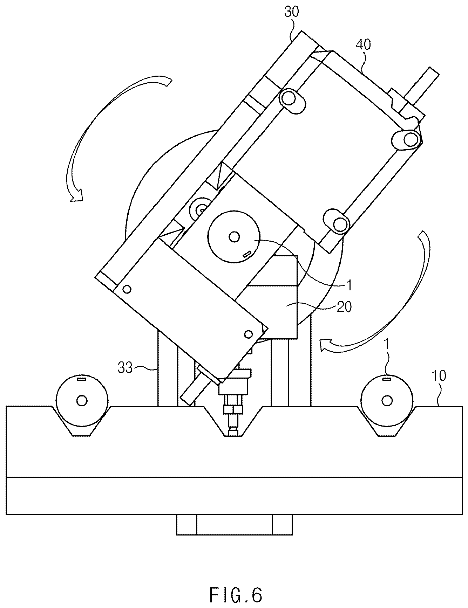

FIG. 1 is a view illustrating a shape (left side) of an outer diameter measurement apparatus of an electrode assembly according to the related art and a state (right side) in which a pusher, an electrode assembly, and a roller are in contact with each other in the outer measurement apparatus, FIG. 2 is a view illustrating a state in which an outer diameter measurement apparatus of an electrode assembly is viewed from above according to the present invention, FIG. 3 is a view illustrating a state in which the outer diameter measurement apparatus of the electrode assembly is viewed from the side according to the present invention, FIG. 4 is a view illustrating a state in which a housing rotates at an angle of 180° when the outer diameter measurement apparatus of the electrode assembly is viewed from the front according to the present invention, FIG. 5 is a view illustrating a state in which a guide bar allows the electrode assembly to ascend up to a fixed height when the outer diameter measurement apparatus of the electrode assembly is viewed from the front according to the present invention, and FIG. 6 is a view illustrating a state in which a housing rotates in the state of FIG. 5.

The outer diameter measurement apparatus 100 provided in this embodiment relates to an outer diameter measurement apparatus of an electrode assembly, which measures an outer diameter of an electrode assembly 1 manufactured to have a cylindrical shape by winding electrodes and separators so as to form a stacked structure and includes a base plate 10, a guide bar 20, a housing 30, and a sensor 40.

Referring to the drawings, the base plate 10 has a structure in which a portion of the base plate 10 is bent or protrudes upward, and a plurality of grooves 11 are provided at regular intervals in an upper end of the base plate 10. In addition, the electrode assembly 1 is seated in each of the grooves 11 of the base plate 10.

Here, two upper ends in which the grooves 11 are formed are provided so that one of the upper ends supports one side of the electrode assembly 1, and the other supports the other side of the electrode assembly 1. In addition, the guide bar 20 is disposed between the one side and the other side of the electrode assembly 1 (that is, between the two upper ends in which the grooves are in the base plate).

The guide bar 20 is configured to allow the electrode assembly 1 to ascend to a certain height from the base plate 10. That is, the guide bar 20 is configured to be able to be expanded and contracted in a longitudinal direction by a hydraulic pressure, a pneumatic pressure, a motor, etc., and as illustrated in FIG. 3, when the measurement starts after standing by at an original position under the electrode assembly 1, as illustrated in FIG. 5, the electrode assembly 1 is lifted to a certain height from the base plate 10. As illustrated more clearly in FIG. 3, the upper end of the guide bar 20 is disposed at an intermediate position of the electrode assembly 1.

In addition, a separate coupling device may be additionally provided at the upper end of the guide bar 20 so that the electrode assembly 1 is seated without being shaken, or an arc-shaped seating surface or groove in which the electrode assembly 1 is seated may be formed.

Therefore, the upper end of the guide bar 20 has a structure in which the electrode assembly 1 is stably seated, and the intermediate portion through which the opening 32 of the housing 30 to be described later passes below the upper end is manufactured in a thin bar shape having a relatively narrow width.

The housing 30 is configured to rotate along a circumference with the electrode assembly 1 ascending from the guide bar 20 as a center.

The housing 30 may be coupled to a separate device and configured to rotate around the electrode assembly 1, but in this embodiment, the housing 30 is coupled to a bracket 33 and configured to rotate by the motor 31.

That is, the bracket 33 has a structure in which a lower end is fixed to the base plate 10, the housing 30 is coupled to one side (surface on which the electrode assembly is placed) at the upper end, and the motor 31 is coupled to the other side. The motor 31 is coupled to the housing 30 to allow the housing 30 to rotate in a forward (clockwise direction in FIG. 4) or reverse (counterclockwise direction in FIG. 4) directions. Thus, the housing 30 may rotate by the motor 31 with the electrode assembly 1 as the center at a point coupled to the bracket 33.

In addition, the housing 30 has a partially opened shape to prevent interference with the guide bar 20 from occurring when rotating around the electrode assembly 1. That is, as illustrated in FIG. 2, an opening 32, which is an opened space with a certain size, is formed in the housing 30, and when the housing 30 rotates, the guide bar 20 passes through the opening 32 without interference.

Thus, as illustrated in FIGS. 4, 5 and 6, the housing 30 may rotate in the forward and reverse directions and also rotate at an angle of 180° or more in each of the forward and reverse directions according to the size and position of the opening 32.

In addition, the sensor 40 is coupled to at least one end or both ends of the housing 30. That is, the sensor 40 is coupled to the housing 30 to measure the outer diameter of the electrode assembly 1 while the housing 30 rotates.

The sensor 40 is provided as a non-contact distance measurement sensor that measures a distance by irradiating a light source onto the surface of the electrode assembly 1. That is, when the sensor 40 irradiates laser or infrared rays from a light emitting part to the surface of the electrode assembly 1 to receive the reflected light, a distance from the electrode assembly may be measured through an amount of voltage change measured by an amount of received light or the received light.

In addition, since the sensor 40 rotates along the circumference of the electrode assembly 1 while the housing 30 rotates, the outer diameter of the electrode assembly 1 may be measured without being in contact with the electrode assembly 1.

The sensor 40 may be mounted only on one end of both ends of the housing 30, but as illustrated in FIG. 2, it is preferable that the sensor 40 are mounted individually on both the ends.

That is, while the sensor 40 is mounted at each of both the ends of the housing 30 to measure the distance (from the surface of the electrode assembly) at the one side of the electrode assembly 1, the distance may also be measured at the other side, and thus, even if the housing 30 rotates only by an angle of 180°, the sensor 40 may be mounted only on the one end of the housing 30 to rotate by the angle of 360°, thereby obtaining the same result as the measurement result.

Therefore, when the housing 30 rotates forward and/or reversely at the angle of 180° or more with the electrode assembly 1 as the center, the sensor 40 may measure the distance (from the sensor to the surface of the electrode assembly) along the entire circumference of the electrode assembly 1 to measure the outer diameter of the electrode assembly.

The outer diameter measurement apparatus of the electrode assembly having the above configuration operates as follows to measure the outer diameter of the electrode assembly 1.

That is, as illustrated in FIGS. 2 and 3, the electrode assembly 1 is seated on the groove 11 of the base plate 10 while the housing 30 and the guide bar 20 are placed at their original positions. In addition, as illustrated in FIG. 5, when the guide bar 20 ascends to lift the seated electrode assembly 1 to a predetermined height, the motor 31 is driven so that the housing 30 rotates along the circumference as illustrated in FIG. 6 with the electrode assembly 1 as the center. Here, the sensor 40 mounted on the housing 30 measures the distance by radiating the light source to the surface of the electrode assembly 1 while the housing 30 rotates.

Thus, since the position of the sensor 40 is a known value, the outer diameter of the electrode assembly 1 may be measured based on the value measured through the sensor 40.

### Second embodiment

The present invention provides an outer diameter measurement method of an electrode assembly, which is capable of being applied to the outer diameter measurement apparatus provided in the first embodiment, as a second embodiment. The outer diameter measurement method according to this embodiment is an outer diameter measurement method that measures an outer diameter of an electrode assembly 1, which has a cylindrical shape by winding electrodes and separators together to form a stacked structure and includes an electrode assembly ascending process and an electrode assembly outer diameter measurement process.

In the electrode assembly ascending process, the electrode assembly 1 ascends to a certain height. That is, in the aforementioned outer diameter measurement device, the electrode assembly 1 mounted on a base plate 10 ascends to a predetermined height through a guide bar 20.

Further, in the electrode assembly outer diameter measurement process, in a state in which the ascending electrode assembly 1 does not move, the sensor 40 measures a distance along a circumference of the electrode assembly 1 so as to be spaced a predetermined distance from the electrode assembly 1 to calculate an outer diameter.

That is, in the aforementioned outer diameter measurement apparatus, as a housing 30 rotates by a motor 31, the sensor 40 revolves around the electrode assembly 1 to measure the outer diameter of the electrode assembly 1.

Here, in the electrode assembly outer diameter measurement process, the sensor 40 irradiates a light source to a surface of the electrode assembly 1 to receive the reflected light source, thereby measuring a distance and then calculates the measured distance by using a rotating distance of the sensor 40 and the light source to measure the outer diameter of the electrode assembly 1.

In the present invention having the above technical features, since the sensor 40 rotates while the electrode assembly 1 is fixed to measure the outer diameter of the electrode assembly 1, the outer diameter may be more accurately measured.

That is, unlike the structure in which the electrode assembly 1 rotates, according to the related art, since the physical influence does not occur on the electrode assembly 1, the reliability of the measured value of the outer diameter may be improved.

Particularly, since the sensor 40 is provided as the non-contact distance measurement sensor, the physical effects applied to the electrode assembly may be completely excluded.

Since an opening is formed in the housing 30 in which the sensor 40 is mounted (having a partially opened shape), interference with the guide bar 20 may be prevented, and a rotatable range of the housing 30 may increase.

That is, the housing 30 may rotate an angle of 180° or more in the clockwise and counterclockwise directions, and thus, the sensor 40 may rotate along the entire circumference of the electrode assembly 1 to measure the outer diameter.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 10:: Base plate
- 20:: Guide bar
- 30:: Housing
- 31:: Motor
- 32:: Opening
- 33:: Bracket
- 40:: Sensor

## Claims

1. An outer diameter measurement apparatus of an electrode assembly, which measures an outer diameter of the electrode assembly manufactured to have a cylindrical shape by winding electrodes and separators together so as to form a cylindrical shape, outer diameter measurement apparatus comprising:
a base plate on which the electrode assembly is mounted thereon;
a guide bar configured to allow the electrode assembly to ascend from the base plate to a certain height;
a housing configured to rotate around the electrode assembly ascending from the guide bar; and
a sensor coupled to the housing to measure an outer diameter of the electrode assembly while the housing rotates.

2. The outer diameter measurement apparatus of claim 1, wherein the sensor comprises a non-contact distance measurement sensor configured to measure a distance by irradiating a light source onto a surface of the electrode assembly.

3. The outer diameter measurement apparatus of claim 2, wherein the light source irradiated onto the surface of the electrode assembly comprises any one of laser or infrared rays.

4. The outer diameter measurement apparatus of claim 1, wherein the housing has a partially opened shape to prevent an interference with the guide bar when rotating around the electrode assembly.

5. The outer diameter measurement apparatus of claim 1, further comprising a bracket having one end coupled to the base plate and the other end coupled to the housing,
wherein the housing rotates at a point that is coupled to the bracket.

6. The outer diameter measurement apparatus of claim 1, wherein the sensor is mounted on any one of both ends of the housing.

7. The outer diameter measurement apparatus of claim 6, wherein the housing rotates forward and reversely an angle of 180° with the electrode assembly as a center.

8. The outer diameter measurement apparatus of claim 1, wherein the sensor is mounted on each of both ends of the housing with the electrode assembly therebetween.

9. An outer diameter measurement method of an electrode assembly, which measures an outer diameter of the electrode assembly manufactured to have a cylindrical shape by winding electrodes and separators together so as to form a cylindrical shape, the outer diameter measurement method comprising:
an electrode assembly ascending process of allowing the electrode assembly mounted on a base plate to ascend to a predetermined height; and
an electrode assembly outer diameter measurement process of allowing a sensor to rotate along the electrode assembly in a state, in which movement of the ascending electrode assembly is fixed, to measure an outer diameter of the electrode assembly.

10. The outer diameter measurement method of claim 1, wherein, in the electrode assembly outer diameter measurement process, the sensor receives a reflected light source to measure a distance after irradiating the light source onto a surface of the electrode assembly, and
the distance measured using a rotating distance of the sensor and the light source is calculated to measure the outer diameter of the electrode assembly.
